Europäisches Patentamt

European Patent Office

Office européen des brevets

(19)

(11) Veröffentlichungsnummer: **0 229 237 B1**

(12) # EUROPÄISCHE PATENTSCHRIFT

(45) Veröffentlichungstag der Patentschrift: **24.06.92**

(21) Anmeldenummer: **86114417.8**

(22) Anmeldetag: **17.10.86**

(51) Int. Cl.⁵: **A23G 9/22**, A23G 9/20, A23G 9/16

(54) **Vorrichtung zum Herstellen von Speiseeis aus einem pumpfähigen Ansatz.**

(30) Priorität: **18.12.85 DE 3544803**

(43) Veröffentlichungstag der Anmeldung:
**22.07.87 Patentblatt 87/30**

(45) Bekanntmachung des Hinweises auf die
Patenterteilung:
**24.06.92 Patentblatt 92/26**

(84) Benannte Vertragsstaaten:
**AT BE CH DE FR GB IT LI NL SE**

(56) Entgegenhaltungen:
DE-A- 2 601 762     DE-B- 1 277 877
US-A- 1 245 073     US-A- 1 779 330
US-A- 2 959 932     US-A- 3 290 015
US-A- 3 529 748     US-A- 3 646 774
US-A- 3 719 056     US-A- 3 823 571
US-A- 4 316 490

(73) Patentinhaber: **LUMEN GmbH Nährmittel- und Maschinenfabrik
Petzmannsberg 11
W-8650 Kulmbach(DE)**

(72) Erfinder: **Menzel, Waldemar
Eichenstrasse 11
W-8650 Kulmbach-Burghaig(DE)**

(74) Vertreter: **Rau, Manfred, Dr. Dipl.-Ing. et al
Rau & Schneck, Patentanwälte Königstrasse 2
W-8500 Nürnberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung nach dem Oberbegriff des Anspruches 1.

Aus der DE-PS 12 77 877 (entsprechend US-PS 3 4o2 567) ist es bekannt, bei einer derartigen Vorrichtung den Ansatz aus dem Vorratsbehälter über einen als Rohr mit relativ großem Querschnitt ausgebildeten Zuführkanal etwa in Höhe der Welle des Rührwerks in den Zylinder frei einfließen zu lassen. Druckluft wird pulsierend in den Gefrierzylinder eingegeben. Das Volumenverhältnis von Luft zu Ansatz, der sogenannte Overrun, ist hierbei durch die Höhe des seitlichen Einlaufs des Zuführkanals in den Zylinder in Verbindung mit der Druckregulierung der zugeführten Druckluft abhängig. Dieses durch Maschinendaten der Vorrichtung festgelegte Luft-Ansatz-Verhältnis ist nicht mehr regulierbar. Es ist aber wünschenswert, daß dieses Luft-Ansatz-Verhältnis veränderbar ist. Beispielsweise ist der Overrun bei einem fetten Speiseeis etwa 100%, d. h. das Luft-Ansatz-Verhältnis beträgt etwa 1 : 1. Bei Fruchteis beträgt dagegen der Overrun nur 30 bis 40%, d. h. das Luft-Ansatz-Verhältnis beträgt etwa 30 bis 40 : 100.

Aus der DE-AS 1 099 562 ist ein Speiseeisbereiter bekannt, der einen Gefrierzylinder mit einem darüber angeordneten Vorratsbehälter aufweist, die durch einen Zuführkanal miteinander verbunden sind. Im Vorratsbehälter ist eine als Zahnradpumpe ausgebildete Schwellpumpe angeordnet, deren eines Zahnrad den Eis-Ansatz und deren anderes Zahnrad Luft ansaugt. Luft und Ansatz werden bereits in der Pumpe emulgiert. Obwohl auf der Luftansaug-Seite und auf der Ansatz-Ansaug-Seite jeweils einstellbare Ventile vorgesehen sind, ist eine genaue und stabile Einstellung des Luft-Ansatz-Verhältnisses hiermit nicht möglich, da unvermeidbar in der Zahnradpumpe Luft auf die Flüssigkeitsseite gelangt.

Aus der US-A-3 823 571 ist eine Vorrichtung zur Abgabe von halbgefrorenen, mit Kohlensäure versetzten Getränken bekannt. Sie weist eine Kühlkammer mit einem Zapfventil auf. In der Kühlkammer ist ein Druckschalter angebracht, der dazu dient, die Menge von Flüssigkeit und Gas in der Kühlkammer zu steuern. Der Druckschalter schließt, wenn der Druck in der Kühlkammer unter einen vorgegebenen Wert fällt. Dann werden eine Pumpe für Wasser und Sirup eingeschaltet und ein Magnetventil geöffnet, mittels dessen eine Kohlensäuregasquelle an die Kühlkammer angeschlossen wird. Hierdurch werden dann dosierte Mengen von Wasser und Sirup einerseits und Gas andererseits in die Kühlkammer eingegeben. Die Kohlensäure wird in der Flüssigkeit gelöst und entweicht beim Zapfen unter Atmosphärendruck zumindest teilweise wieder.

Aus der US-A-3 719 056 ist eine Vorrichtung zum Herstellen von Speiseeis der gattungsgemäßen Art bekannt. Der Speiseeis-Ansatz wird einem Kühl- oder Gefrier-Zylinder über eine Pumpe zugeführt. Die Zufuhr von Speise-Ansatz einerseits und Luft andererseits erfolgt unabhängig voneinander.

Der Erfindung liegt die Aufgabe zugrunde, eine Vorrichtung der gattungsgemäßen Art so auszugestalten, daß das Verhältnis von Luft zu Ansatz exakt eingehalten werden kann.

Diese Aufgabe wird durch die Merkmale im Kennzeichnungsteil des Anspruches 1 gelöst. Die vom Rührwerk in den Ansatz eingeschlagene Luft wird beim Frieren von Emulgatoren und Stabilisatoren gehalten, d.h. es wird Luft gar nicht oder nur in sehr geringem Umfang gelöst. Daraus ergibt sich, daß mit dem Einschlag der Luft in den Ansatz sich der Druck im Zylinder nicht ändert. Bei Entnahme von Portionen aus dem Zylinder fällt der Druck ab, was dazu führt, daß mittels eines das Ventil und gleichzeitig die Pumpe ansteuernden, den Durch ein Zylinder erfassenden Druckwächters in einem konstanten Mengenverhältnis zueinander Luft und Ansatz zugeführt wird, so daß jeweils schrittweise die bei der Entnahme einer Portion entnommenen Mengen an Ansatz und Luft wieder zugeführt werden.

Die Maßnahme nach Anspruch 2 stellt in einfacher Weise sicher, daß das Verhältnis der pro Zeiteinheit zugeführten Luftmenge zur pro Zeiteinheit zugeführten Ansatzmenge verändert werben kann.

Die Maßnahmen nach Anspruch 3 stellen schließlich sicher, daß die Pumpe immer Ansatz und nicht Luft aus dem Vorratsbehälter ansaugt.

Weitere Vorteile und Merkmale der Erfindung ergeben sich aus der Beschreibung eines Ausführungsbeispiels anhand der Zeichnung. Es zeigt

Fig. 1     eine Vorrichtung gemäß der Erfindung in schematischer Darstellung im vertikalen Längsschnitt und

Fig. 2     einen Querschnitt gemäß der Schnittlinie II-II durch Fig. 1.

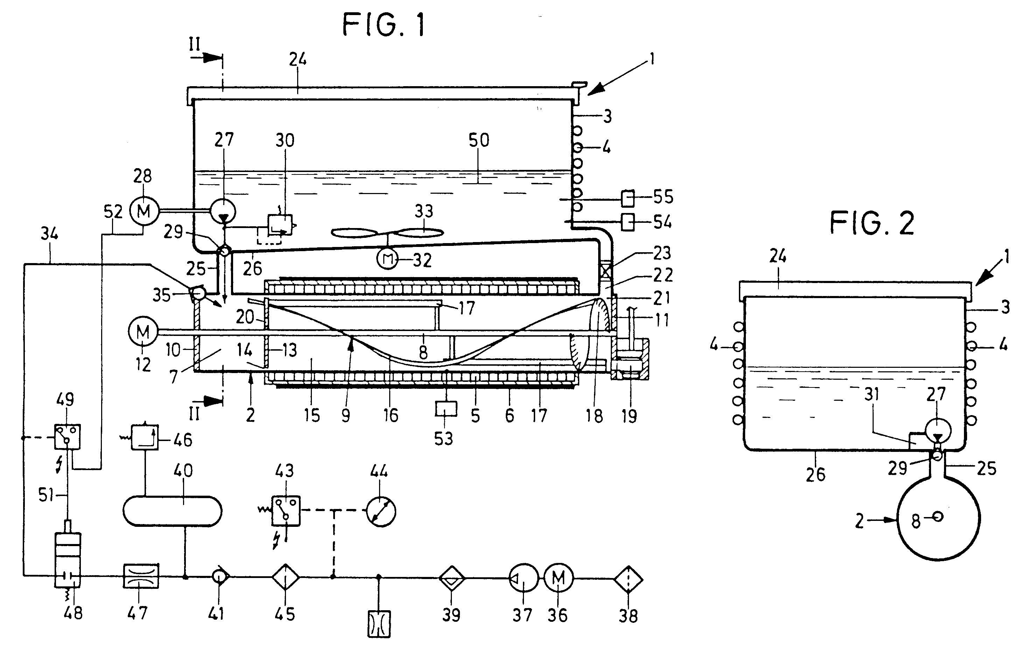

Wie aus den Figuren 1 und 2 hervorgeht, ist - in allgemein üblicher Weise - ein Vorratsbehälter 1 oberhalb eines horizontalen Kühl- oder Gefrier-Zylinders 2 angeordnet und bildet mit diesem weitgehend eine Einheit. Die Seitenwände 3 des Vorratsbehälters 1 sind mit einem Kühlrohr 4 versehen, das etwa schraubenförmig um die Seitenwände 3 verläuft und nur schematisch dargestellt ist.

Der Zylinder 2 ist mit einem Kühlmantel 5 umgeben, durch den ein Kältemittel gepumpt werden kann. Der Kühlmantel 5 selber ist wiederum von einem Heizmantel 6 umgeben. Kühlmantel 5 und Heizmantel 6 erstrecken sich weitgehend über die volle Länge des Zylinders 2 mit Ausnahme eines an einem - in Fig. 1 linken - Ende befindlichen Bereichs, in dem sich eine Einlaufkammer 7 des Zylinders 2 befindet. Der Zylinder 2 wird koaxial von einer Welle 8 eines Rühr- und Schabewerks 9 durchsetzt, die in endseitigen Stirnwänden 1o, 11 des Zylinders 2 drehbar gelagert und aus einem - in Fig. 1 linken - Ende herausgeführt ist. Das Rühr- und Schabewerk 9 wird auf dieser Seite von einem Elektro-Motor 12 angetrieben.

Auf der Welle 8 ist eine Scheibe 13 angebracht, die nur einen sehr schmalen Spalt 14 zur Wand des Zylinders 2 freiläßt. Diese Scheibe 13 trennt die Einlaufkammer 7 von der eigentlichen Kühl- und/oder Gefrier-Kammer 15 im Zylinder 2, die von dem Kühlmantel 5 und dem Heizmantel 6 umgeben ist. In der Kammer 15 ist auf der Welle 8 eine schraubenlinienförmige Rührwendel 16 befestigt. An der Welle 8 sind außerdem zwei an der Innenwand des Zylinders 2 anliegende Schabeklingen 17 angebracht, die ständig den Eisansatz von der Innenwand des Zylinders 2 abschaben. Im Anschluß an die Rührwendel 16 ist auf der Welle 8 noch eine kurzgängige Schnecke 18 mit einem Schneckengang befestigt, die eine gewisse Stauwirkung gegenüber der Rührwendel 16 ausübt. Vor der dem Motor 12 entgegengesetzten Stirnwand 11 ist ein Zapfventil 19 angebracht. In der eine Zwischenwand bildenden Scheibe 13 kann eine die Einlaufkammer 7 mit der Kammer 15 verbindende Durchlaßöffnung 2o ausgebildet sein.

Die Kühl- und/oder Gefrier-Kammer 15 ist in dem im Zapfventil 19 bzw. der zugeordneten Stirnwand 11 benachbarten Endbereich 21 über einen Verbindungskanal 22 mit dem Vorratsbehälter 1 verbunden. In diesem durch ein Rohr gebildeten Verbindungskanal 22 ist ein Ventil 23 angeordnet.

Der mittels eines Deckels 24 verschließbare Vorratsbehälter 1 ist mit der Einlaufkammer 7 des Zylinders 2 über einen Zuführkanal 25 verbunden, dem eine am Boden 26 des Vorratsbehälters 1 in diesem angeordnete Pumpe 27 vorgeordnet ist. Diese Pumpe 27 wird von einem Elektro-Motor 28 angetrieben. Bei der Pumpe 27 kann es sich um eine Zahnradpumpe handeln. Ihr ist im Bereich des Zuführkanals 25 ein Rückschlagventil 29 vorgeordnet, das einen Rückfluß von Flüssigkeit aus dem Zylinder 2 bzw. dessen Einlaufkammer 7 in den Vorratsbehälter 1 verhindert.

Des weiteren ist die Pumpe 27 mit einem Überdruckventil 3o versehen, das öffnet, wenn der Gegendruck von der Einlaufkammer 7 her einen vorgegebenen Wert überschreitet. In diesem Fall wird dann die aus dem Vorratsbehälter 1 in die Einlaufkammer 7 zu fördernde Flüssigkeit im Kurzschluß wieder in den Vorratsbehälter 1 gegeben. Solche technischen Ausführungen von Pumpen sind handelsüblich.

Die Pumpe 27 weist einen Ansaugstutzen 31 auf, dessen offenes Ende im Bereich des Bodens 26 des Vorratsbehälters 1 ist, so daß im Vorratsbehälter 1 keine Toträume entstehen.

Am Boden 26 des Vorratsbehälters 1 ist ein mittels eines Elektro-Motors 32 angetriebener Rührer 33 angeordnet, der die im Vorratsbehälter 1 befindliche Flüssigkeit umwälzt.

Über eine Luftleitung 34 wird in den oberen Bereich der Einlaufkammer 7 Luft eingeführt. Um zu verhindern, daß Flüssigkeit und/oder Luft aus der Einlaufkammer 7 in die Luftleitung 34 zurückströmen kann, ist in dieser ein Rückschlagventil 35 vorgesehen, das beispielsweise durch ein sogenanntes Lippenventil gebildet sein kann. Der Luftleitung 34 wird Druckluft von einem durch einen Elektro-Motor 36 angetriebenen Kompressor 37 zugeführt, dem ein Luftfilter 38 vorgeordnet ist. Dem Kompressor ist ein Druckluftentfeuchter 39 nachgeordnet.

Weiterhin ist in der Luftleitung 34 ein Druckluftvorratsbehälter 4o angeordnet, zwischen dem und dem Kompressor 37 ein Rückschlagventil 41 angeordnet ist. Zwischen dem Kompressor 37 und dem Rückschlagventil 41 ist weiterhin ein Auslaß-Drosselventil 42 angeordnet, durch das ständig etwas Druckluft ausströmt. Wegen des Rückschlagventils 41 kann aber keine Druckluft aus dem Druckluftvorratsbehälter 4o zum Drosselventil 42 zurückströmen Ebenfalls zwischen Kompressor 37 und Rückschlagventil 41 ist in der Luftleitung 34 ein Druckwächter 43 angeordnet, der jeweils den Kompressor 37 einschaltet, wenn ein Mindestdruck in der Luftleitung 34 zwischen Kompressor 37 und Rückschlagventil 41 unterschritten wird. Dieser Mindestdruck kann beispielsweise bei 1,7 bar liegen. Der Kompressor schaltet wieder ab, wenn der Druck einen vorgebbaren Maximaldruck von beispielsweise 2,o bar überschreitet. Der Luftdruck kann visuell mittels eines Druckmeßgeräts 44 überwacht werden. Dem Rückschlagventil 41 ist ebenfalls noch ein Druckluft-Sterilfilter 45 vorgeordnet. Am Druckluftvorratsbehälter 4o ist ein Druckbegrenzungsventil 46 angeordnet.

In der Luftleitung 34 ist zwischen dem Druckluftvorratsbehälter 4o und dem Rückschlagventil 35 ein Drosselventil 47 und ein Magnet-Ventil 48 angeordnet. Außerdem ist zwischen dem Magnet-Ventil 48 und dem Rückschlagventil 35 ein Druckwächter 49 vorgesehen.

Die vorstehend beschriebene Ausführung arbeitet wie folgt:
Es wird davon ausgegangen, daß sich im Vorratsbehälter sogenannter Eismix 5o, d.h. ein flüssiger Speiseeisansatz, befindet, und daß im Zylinder 2 hieraus unter gleichzeitigem Lufteinschlag Speiseeis hergestellt wird.

Der Eismix 5o wird mittels der Pumpe 27 in die Einlaufkammer 7 des Zylinders 2 gepumpt, und zwar abhängig vom Druck, der dort herrscht. Da - abgesehen von der instationären Anfahrphase - der Druck im Zylinder 2 sich nur ändert, wenn Speiseeis-Portionen mittels des Zapfventils 19 entnommen werden, wird also die Pumpe 27 immer während oder nach der Entnahme einer Speiseeis-Portion eingeschaltet.

Die zur Auflockerung des Speiseeises benötigte Luft wird über die Luftleitung 34 zugeführt. Die pro Zeiteinheit durch die Luftleitung 34 zuzuführende Luftmenge wird an dem Drosselventil 47 eingestellt.

Üblicherweise kann die Einstellung so erfolgen, daß zwischen o,8 und 2,7 l/min Luft in die Einlaufkammer gedrückt werden. Da die Leistung der Pumpe 27 pro Zeiteinheit konstant ist und beispielsweise 2,5 l/min beträgt, kann das Volumenverhältnis von Eismix und Luft, die pro Minute zugeführt werden, sehr genau auf einem vorgegebenen Wert gehalten werden.

Wenn durch Entnahme einer Speiseeis-Portion der Druck im Zylinder 2 absinkt, dann sinkt der Druck auch in der Leitung 34 zwischen dem Rückschlagventil 35 und dem Magnet-Ventil 48 ab, so daß der Druckwächter 49 diesen Druckabfall registriert. Sinkt der Druck unter einen vorgegebenen Wert von beispielsweise 1,2 bar, dann wird über eine Steuerleitung 51 ein Signal zum Öffnen des Magnet-Ventils 48 und über eine Steuerleitung 52 ein Signal zum Einschalten des Motors 28 und der Pumpe 27 gegeben. Es werden dann also gleichzeitig im vorgegebenen Mengenverhältnis Luft und Eismix in die Einlaufkammer 7 des Zylinders 2 gefördert. Wenn der Druck im Zylinder 2 wieder einen vorgegebenen Höchstwert von beispielsweise 1,5 bar erreicht hat, werden über entsprechende Signale vom Druckwächter 49 das Magnet-Ventil 48 geschlossen und der Motor 28 der Pumpe 27 abgeschaltet. Dieser Vorgang wiederholt sich ständig, wenn Speiseeis-Portionen aus dem Zapfventil 19 entnommen werden.

Der Vorratsbehälter 1 ist drucklos; der darin gelagerte Eismix wird bei einer Lagertemperatur von ca. 2°C kühlgehalten und periodisch vom Rührer 33 umgewalzt, um eine gleichmäßige Temperatur innerhalb des Eismixes sicherzustellen.

Wie sich aus dem Vorstehenden ergibt, ist der Zylinder 2 immer mit Eismix bzw. fertigem Speiseeis gefüllt, unabhängig davon, ob im Vorratsbehälter 1 wenig oder viel Eismix 5o vorhanden ist. Wenn - üblicherweise nach dem täglichen Betriebsschluß - der noch im Vorratsbehälter 1 vorhandene Eismix 5o und das im Zylinder 2 vorhandene Speiseeis pasteurisiert werden sollen, wird die Druckluftzufuhr durch generelles Schließen des Magnet-Ventils 48 unterbunden und das Ventil 23 im Verbindungskanal 22 geöffnet. Gleichzeitig werden das Rühr- und Schabewerk 9 und die Pumpe 27 in Betrieb gesetzt. Außerdem werden die Kühlung über das Kühlrohr 4 und den Kühlmantel 5 abgeschaltet und die Heizung durch den Heizmantel 6 eingeschaltet. Während des Pasteurisiervorganges wird der Heizmantel 6 über einen die Temperatur der Innenwand des Zylinders 2 erfassenden Thermostaten 53 geregelt. Der Eismix wird mittels der Rührwendel 16 in Richtung Zapfventil gefördert und von dort mittels der Schnecke 18, die während des Betriebes zum Ausdrücken der Speiseeis-Portionen durch das Zapfventil 19 dient, durch den geöffneten Verbindungskanal 22 in den Vorratsbehälter 1 zurückgefördert. Von hier wird der Eismix mittels der Pumpe 27 wieder in die Einlaufkammer 7 zurückgefördert. Es wird also ein ständiger Kreislauf des Eismixes zwischen Vorratsbehälter 1 und Zylinder 2 erreicht, wobei alle Wandbereiche des Zylinders 2 bestrichen werden. Da der Eismix mittels des Rühr- und Schabewerks 9 und insbesondere mittels der Schabeklingen 17 im Zylinder stark verwirbelt wird, erfolgt eine gute Wärmeübertragung von der mittels des Heizmantels 6 beheizten Fläche des Zylinders 2 auf den Eismix. Wenn der Eismix zum Pasteurisieren auf etwa 72°C erhitzt werden soll, ist es daher ausreichend, wenn die Temperatur der Innenwand des Zylinders 2 mittels des Thermostaten 53 auf einer Temperatur von 75 bis 8o°C gehalten wird. Damit ist sichergestellt, daß der Eismix nicht an der Innenwand des Zylinders 2 anbrennt und somit keinen karamelartigen Geschmack annimmt. Sobald der gesamte Eismix 5o die Pasteurisierungstemperatur erreicht hat, was über einen im Vorratsbehälter 1 angebrachten Thermostaten 54 erfaßt wird, wird der Heizmantel 6 abgeschaltet, wobei diese Abschaltung - gesteuert über eine nichtdargestellte Zeituhr - verzögert erfolgen kann, um eine wirksame Keimabtötung im Eismix 5o sicherzustellen.

Anschließend wird die in der Zeichnung nichtdargestellte Kälteanlage wieder eingeschaltet und der Eismix 5o über das Kühlrohr 4 und den Kühlmantel 5 auf Lagertemperatur von 2°C heruntergekühlt. Das Erreichen dieser Temperatur wird über einen im Vorratsbehälter 1 angebrachten Thermostaten 55 überwacht.

Es ist möglich, zum Pasteurisieren die Drehzahl der Pumpe 27 zu verdoppeln, um den Mixumlauf zu vergrößern. Die Menge, die pro Zeiteinheit zwischen Zylinder 2 und Vorratsbehälter 1 umgewälzt wird, wird ausschließlich durch die Leistung der Pumpe 27 bestimmt.

**Patentansprüche**

1. Vorrichtung zum Herstellen von Speiseeis aus einem zur weitgehenden Vermeidung der Lösung von Luft Emulgatoren und Stabilisatoren enthaltenden pumpfähigen Speiseeis-Ansatz, mit einem Vorratsbehälter (1) für den Ansatz und einem mit diesem über einen Zuführkanal (25) verbundenen Kühl- oder Gefrier-Zylinder (2), in den eine Luftleitung (34) mit einem in Abhängigkeit vom Druck im Zylinder (2) über einen Druckwächter (49) gesteuerten Ventil (48) zur Zuführung von Druckluft annähernd konstanten Druckes einmündet, in dem ein Rühr- und Schabewerk (9) zum Einschlag der Luft in den Ansatz angeordnet ist, und der ein Zapfventil (19) zur Entnahme kleiner Speiseeisportionen aufweist, dadurch gekennzeichnet, daß eine Pumpe (27) zur Zuführung des Ansatzes aus dem Vorratsbehälter (1) in den Zylinder (2) vorgesehen ist, und daß zur Zuführung von Luft und Ansatz in einem annähernd konstanten Verhältnis das Ventil (48) geöffnet bzw. geschlossen und jeweils gleichzeitig die Pumpe (27) eingeschaltet bzw. ausgeschaltet ist.

2. Vorrichtung nach Anspruch 1, dadurch gekennzeichnet, daß in der Luftleitung (34) ein einstellbares Drosselventil (47) vorgesehen ist.

3. Vorrichtung nach Anspruch 1, dadurch gekennzeichnet, daß die Pumpe (27) dem Zuführkanal (25) unmittelbar vorgeordnet ist.

## Claims

1. Apparatus for preparing ice cream from a pumpable ice cream starting mixture containing emulsifiers and stabilizers in order to largely prevent air from dissolving, with a storage container (1) for the starting mixture and a cooling or freezing cylinder (2) being in communication with the storage container (1) via a supply conduit (25), into which cylinder (2) an air line (34) opens with a valve (48) controlled via a pressure monitor (49) in dependance on the pressure in the cylinder (2) for supplying compressed air at approximately constant pressure, in which cylinder (2) a stirring and scraping mechanism (9) is disposed for beating the air into the starting mixture, and which comprises a discharge valve (19) for withdrawing small servings of ice cream, characterized in that a pump (27) is provided for supplying the starting mixture from the storage container (1) to the cylinder (2), and in that for supplying air and starting mixture at an approximately constant ratio the valve (48) is opened or closed and at the same time respectively the pump (27) is switched on or off.

2. Apparatus according to claim 1, characterized in that an ajdustable throttle valve (47) is provided in the air line (34).

3. Apparatus according to claim 1, characterized in that the pump (27) directly precedes the supply conduit (25).

## Revendications

1. Appareil de fabrication de glaces comestibles à partir d'un mélange susceptible de pompage contenant des émulsifiants et des stabilisateurs afin d'éviter dans une large mesure la dissolution d'air, comprenant un réservoir de mélange (1) et un tambour de refroidissement ou de réfrigération (2), qui est relié à ce réservoir par un conduit d'alimentation (25) et dans lequel débouche une conduite d'air (34) destinée à apporter de l'air comprimé à pression approximativement constante et équipée d'une soupape (48) commandée, en fonction de la pression dans le tambour (2), par un manostat (49), un agitateur-racleur (9) étant disposé dans le tambour (2) pour incorporer l'air dans le mélange et le tambour (2) présentant un distributeur de soutirage (19) pour prélever des petites portions de glace comestible, caractérisé en ce qu'une pompe (27) est prévue pour apporter le mélange du réservoir (1) dans le tambour (2), et en ce qu'afin d'obtenir un apport d'air et de mélange dans un rapport approximativement constant, la soupape (48) est ouverte ou fermée et, simultanément, la pompe (27) est respectivement enclenchée ou coupée.

2. Appareil selon la revendication 1, caractérisé en ce qu'un étrangleur réglable (47) est prévu dans la conduite d'air (34).

3. Appareil selon la revendication 1, caractérisé en ce que la pompe (27) est disposée juste devant le conduit d'alimentation (25).

FIG. 1

FIG. 2